(19) **Europäisches Patentamt / European Patent Office / Office européen des brevets**

(11) **EP 1 563 621 B1**

(12) **EUROPEAN PATENT SPECIFICATION**

(45) Date of publication and mention of the grant of the patent:
**22.07.2009 Bulletin 2009/30**

(51) Int Cl.:
*H04B 15/00* $^{(2006.01)}$    *H04K 1/00* $^{(2006.01)}$
*H04L 27/30* $^{(2006.01)}$    *H04B 1/707* $^{(2006.01)}$

(21) Application number: **03768691.2**

(22) Date of filing: **05.11.2003**

(86) International application number:
**PCT/US2003/035267**

(87) International publication number:
**WO 2004/045117 (27.05.2004 Gazette 2004/22)**

(54) **Method and apparatus for RAKE combining based upon signal to interference plus noise ratio**

Verfahren und Vorrichtung zum Rake-kombinieren auf der Basis des Signal-zu-Interferenz-plus-Rausch-Verhältnis

Procédé et dispositif de combinaisone RAKE en fonction du rapport signal interference plus bruit

(84) Designated Contracting States:
**DE FR GB**

(30) Priority: **12.11.2002 US 425424 P**

(43) Date of publication of application:
**17.08.2005 Bulletin 2005/33**

(73) Proprietor: **Broadcom Corporation
Irvine, CA 92617 (US)**

(72) Inventors:
• **KONG, Ning
San Diego, CA 92122 (US)**
• **RIPHAGEN, Ian
San Diego, CA 92109 (US)**
• **LOTTER, Michiel
San Diego, CA 92130 (US)**

(74) Representative: **Jehle, Volker Armin et al
Bosch Jehle Patentanwaltsgesellschaft mbH
Flüggenstrasse 13
80639 München (DE)**

(56) References cited:
**US-A- 5 652 765**    **US-A- 5 999 560**
**US-B1- 6 215 814**    **US-B1- 6 272 167**

**Description**

**FIELD OF THE INVENTION**

The present invention relates to spread spectrum communication systems and in particular to a technique for recovering information.

**BACKGROUND OF THE INVENTION**

Recently, various forms of Code-Division Multiple Access (CDMA) wireless communication systems have become standardized and deployed in a number of countries. More specifically, such standards include IS-95, cdma2000 and WCDMA. In CDMA systems, users are distinguished from each other by being assigned different code sequences.

Within CDMA systems, a "pilot" signal is often transmitted in order to facilitate the performance of a number of operations at a receiver. For example, the pilot signal may be utilized by the receiver to establish timing and frequency synchronization with the transmitter and to estimate channel characteristics. Each pilot signal is typically uniquely associated with a particular base station in order to enable a mobile station to identify the base station from which a pilot signal is received. Generation of a pilot signal is typically effected by "covering" a known data pattern with a known Walsh code and spreading the result with a known pseudo-noise (PN) sequence.

RAKE receivers operative to implement diversity reception techniques are often deployed within CDMA systems to extract pilot, user traffic and other data from signal energy received over a channel. Each "finger" or diversity branch of the RAKE receiver processes its assigned multipath component and recovers the associated pilot signal, user traffic and other data. In coherent CDMA system implementations, recovered pilot signal information is generally used to estimate the characteristics of the channel (e.g., amplitude and phase) needed for coherent detection within the RAKE receiver. The pilot signal is designed to be generated so as to be orthogonal to the spreading codes assigned to system users in order to avoid engendering interference during the data demodulation process. However, in the case of dispersive multipath channels, the various received multipath signal components will be mutually non-orthogonal and will hence create undesirable interference. Specifically, with respect to a given multipath signal component, unwanted contributions due to the multipath components of the other channels and the pilot signal tend to introduce interference.

Undesirably, conventional RAKE receivers are not designed to mitigate the effects of such interchannel multipath interference. In particular, such RAKE receivers generally utilize maximal ratio combining (MRC) schemes in combining the different multipath components processed thereby. Only under certain special conditions (e.g., there is no multipath or all of the multipaths have the same average power) will MRC techniques produce optimal results..

With the advent of so-called third generation or "3G" wireless systems, research has been carried out in an attempt to develop a RAKE combining scheme which mitigates the effects of interference. For example, in one proposed approach the interference correlation among different multi-paths is utilized to find a set of combining weights which maximize a signal-to-interference-plus-noise ratio (SINR), rather than the maximization of SNR contemplated by MRC techniques. In this approach, training sequences are used to adapt the combining weights such that the interference is minimized. Unfortunately, in one implementation of this approach a correlation matrix is required to be calculated, which significantly increases complexity. In other implementations, the adaptation of the combining weights has been found to be significantly influenced by fading, which degrades performance. As a consequence, MRC techniques are still being used within the RAKE receivers being developed for 3G systems. However, since the MRC process remains susceptible to the deleterious effects of interference, it has been deployed in conjunction with various separate interference reduction schemes (e.g., parallel or serial interference cancellation, pilot interference cancellation, and so on), thereby increasing cost and complexity.

Accordingly, there exists a need for a low-complexity combining scheme for RAKE receivers that is less susceptible to the effects of multipath interference than are conventional combining techniques.

US 6,215,814 relates to a RAKE receiver of a CDMA system using IRC, the receiver receiving a radio signal by using at least two antenna branches. A RAKE finger comprises: a weighting coefficient part for forming weighting coefficients maximizing the Signal-to-Interference-and-Noise Ratio for each antenna branch; a multiplier for multiplying a pilot part, despread by a despreader in each antenna branch, by a weighting coefficient; a multiplier for multiplying a data part, despread by a despreader in each antenna branch, by a weighting coefficient; an antenna branch summer for combining the despread pilot parts, received via the separate antenna branches and multiplied by the weighting coefficient, to one pilot signal; an antenna branch summer for combining the despread data parts, received via the separate antenna branches and multiplied by the weighting coefficient, to one data signal. In addition, the receiver comprises a RAKE finger summer for combining the data signals of the RAKE fingers operating by different delays to a sum data signal representing the received bits.

According to the invention, there are provided a method for recovering information from a spread spectrum information signal as defined by independent claim 1 and an apparatus for recovering information from a spread spectrum information signal as defined by independent claim 2.

Further advantageous features of the invention are defined by the dependent subclaims.

## BRIEF DESCRIPTION OF THE DRAWINGS

For a better understanding of the nature of the features of the invention, reference should be made to the following detailed description taken in conjunction with the accompanying drawings, in which:

FIG. 1 is a block diagram of a mobile unit receiver within which may be implemented the SINR-based combining scheme of the present invention.

FIG. 2 is a block diagram of a RAKE receiver module included within the mobile unit receiver of FIG. 1.

FIG. 3 provides an illustrative representation of a model of generation and transmission of an exemplary downlink signal within a spread spectrum communication system.

FIG. 4 illustratively represents a RAKE receiver having receiver fingers configured to implement to implement the optimal combining scheme of the present invention.

FIG. 5 depicts a RAKE receiver which incorporates weighting elements comprising simplified versions of the weighting elements included within the RAKE receiver of FIG. 4.

## DETAILED DESCRIPTION OF THE INVENTION

The present invention recognizes that the diversity combining schemes currently used in the RAKE receivers are generally not optimized for operation under the conditions typically existing within a multiple access environment serving mobile units. In particular, the present invention is directed to a system and method for diversity combining based upon maximization of a signal-to-interference-plus-noise-ratio (SINR). The inventive approach to diversity combining may be implemented using a low-complexity arrangement which has been found to offer improved bit error rate (BER) performance relative to conventional techniques.

The optimal SINR-based combining scheme of the present invention may be implemented within a CDMA receiver disposed to process plural multipath signal components. As is known, a received CDMA signal generally is comprised of a number of multipath components, each of which is typically separately processed by an associated "finger" of a CDMA receiver. From the perspective of a given multipath component, the multipath components processed by other receiver fingers constitute undesirable signal interference. As is described below, the SINR-based combining scheme of the present invention advantageously exhibits increased immunity to the potentially adverse consequences of such interference.

### RAKE Receiver Architecture

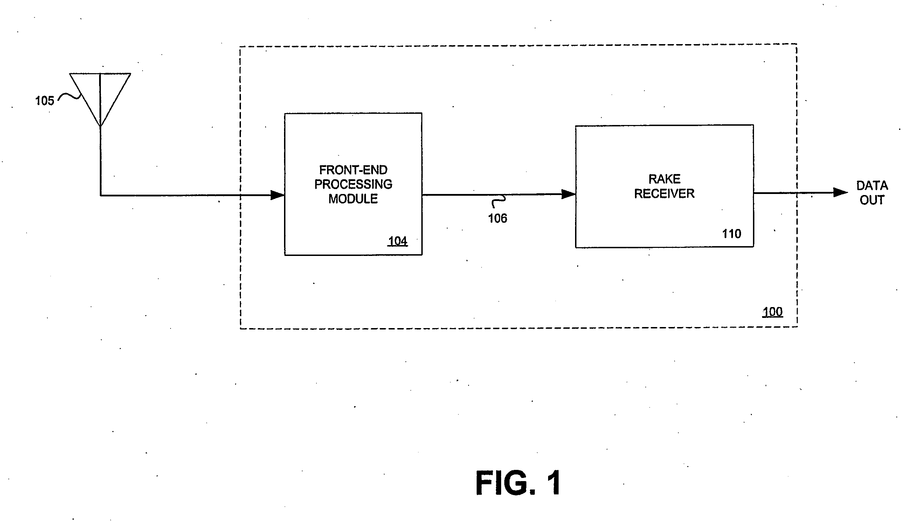

Turning now to FIG. 1, a block diagram is provided of a mobile unit receiver 100 within which may be implemented the SINR-based combining scheme of the present invention. The mobile unit receiver 100 is presumed to be disposed within a mobile unit configured to operate within a CDMA communication system. The mobile unit receiver 100 includes a front-end processing module 104 which receives forward link signal components collected by an antenna 105. The forward link signal components arise upon transmission by a transmitter (not shown) of a CDMA communication signal though a multipath propagation environment to the mobile unit. The front-end processing module 104 filters, amplifies, downconverts and digitizes the received forward link signal in order to create a set of received data samples 106 provided to a RAKE receiver module 110. In operation, the RAKE receiver module 110 functions to generate recovered symbols on the basis of the data samples 106 provided by the front-end processing module 104. As is described below, the RAKE receiver module 110 is configured to process the multiple components of the received signal arriving via different signal paths, or "multipaths".

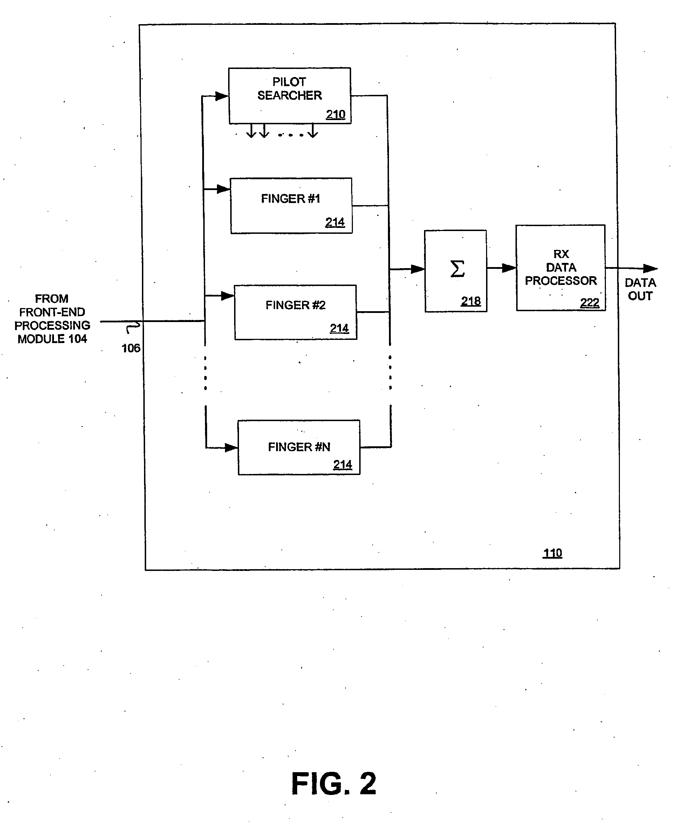

Referring now to FIG. 2, a block diagram is provided of the RAKE receiver module 110. The RAKE receiver module 110 includes a number of diversity processing paths 214, or "fingers", each of which digitally process the data samples 106 corresponding to an instance of the forward link signal received over one such signal path. Each finger 214 processes a particular multipath component of the received signal. Such processing includes despreading the data samples 106 using a PN sequence in time alignment with the multipath signal being processed by the applicable finger 214. The resultant candidate symbol streams from the fingers 214 are provided to a diversity combiner module 218, which synthesizes a single composite symbol stream on the basis of these candidate streams. A receive (RX) data processor 222 then receives and decodes the composite symbol stream from RAKE receiver module 110 in order to recover the user data and message information transmitted on the forward link.

As mentioned above, each of the fingers 214 are used to demodulate and otherwise process an instance of the forward link signal received over a different air path of the multipath propagation environment. Each finger 214 is of substantially identical structure, but operates on the basis of different parameters characteristic of its associated air path (e.g., gain, phase and time delay). The RAKE receiver module 110 further includes a pilot searcher 210 for detecting various multipath components of the pilot signal being received. This searching is effected using known techniques to correlate the received signal with a PN sequence associated with the pilot signal. The pilot searcher provides the detected offsets in the PN signal associated with each multipath component to a finger 214 assigned to process such multipath component.

Various conventional aspects of the structure and operation of a RAKE receiver have now been described. Attention is now directed to a description of a system in which may be incorporated an exemplary implementation of the SINR-based combining scheme of the present invention.

**System Model**

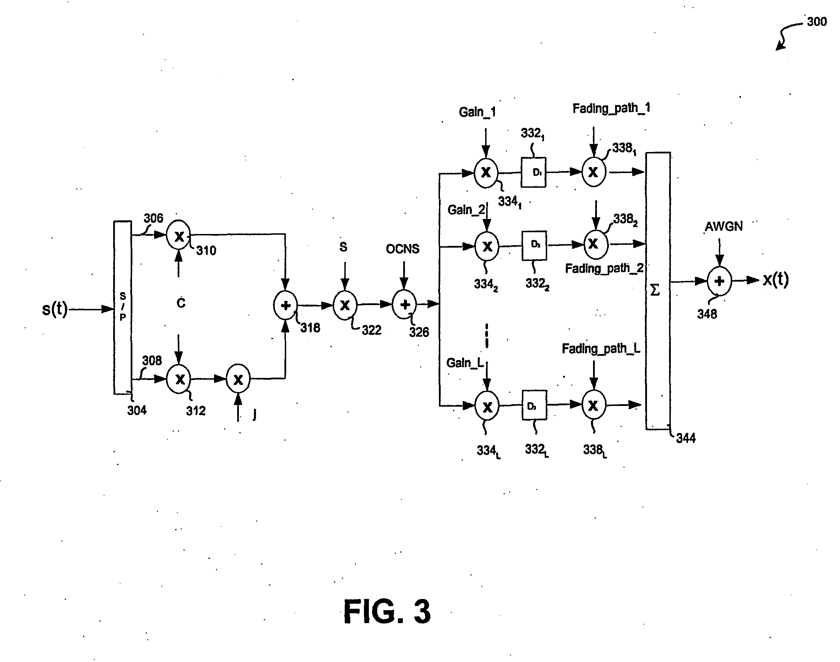

Referring now to FIG. 3, an illustrative representation is provided of a model 300 of generation and transmission of an exemplary downlink signal within a spread spectrum communication system. As shown in FIG. 3, the signal $s(t)$ to be transmitted is initially modulated by in-phase (I) and quadrature phase (Q) pseudo noise (PN) spreading sequences within a serial to parallel (S/P) input module 304. The resultant I and Q spread signals 306 and 308 are then channelized using first and second code spreaders 310 and 312, respectively. This channelization may be effected using a set of orthogonal Walsh spreading codes, where each different code corresponds to a particular user. The channelized I and Q signals are then combined within a summer 318 and modulated using a complex scrambling sequence (S) via multiplier 322. Although not shown in FIG. 3, the channelized I and Q signals are each filtered by FIR filters, up-converted to radio frequency (RF) signals, combined and transmitted via an antenna over the air to one or more user stations. As a result, the RF transmitted signal includes a summation of all channels (i.e., data and pilot channels) generated within the system of FIG. 3, which is represented by the addition of an orthogonal channel noise source (OCNS) by adder 326. That is, the OCNS represents the interference associated with other system users relative to the input signal $s(t)$.

Referring again to FIG. 3, the output of adder 326 is split into L separate multipaths having different delays 332 and each path is distorted by propagation attenuation and Rayleigh fading. This distortion arising from propagation attenuation and Rayleigh fading is represented by way of multipliers 334 and 338, respectively. At a receiver (not explicitly shown in FIG. 3), the composite signal L multipath signals arrive as a composite signal as indicated by the summation of the L multipath signals within a combiner 344. Finally, white Gaussian noise (AWGN) is added 348 to the output of the combiner 344.

It is observed that the interference power due to the OCNS within each of the L multipath signals, and hence arising within each receiver finger 214, may be represented by composite interference signal comprised of a sum of weighted sources of OCNS. Specifically, each such OCNS is weighted by a different gain factor depending upon the attenuation of the associated multipath channel. However, the different delayed versions of signals (including pilot and different data channels) processed by ones of the fingers 214 appear to other of the fingers 214 as interference. As is described hereinafter, the diversity combining scheme of the present invention functions to mitigate the effects of such interference.

**Derivation of optimum combining scheme**

Based upon the optimum criterion of maximal signal-to-interference-plus-noise ratio (SINR), the optimal combining ("OC") weights for each finger 214 of the RAKE receiver module 110 to achieve maximal SINR may be expressed as follows:

$$\mathbf{w} = \mathbf{R}_{i+n}^{-1}\mathbf{r}_{xd}^{*} \qquad\qquad (1)$$

where $\mathbf{R}_{i+n}$ is the correlation matrix of the interference and noise, and where $\mathbf{r}_{xd}^{*}$ is an L-element vector of the complex conjugates of the gains of the L multipath channels (i.e., the MRC weights). Since the inter-path interference and noise are uncorrelated, $\mathbf{R}_{i+n}$ is a diagonal matrix. The elements of $\mathbf{R}_{i+n}$, denoted by $r_{ij}$, are as follows:

$$r_{ij} = \begin{cases} \sum_{l \neq j}^{L} \alpha_l^2 c + N\sigma_n^2, & i = j \\ 0, & i \neq j \end{cases} \quad (2)$$

where $\alpha_l^2$ is the instantaneous channel gain of the 1th path (each path will generally have a different gain since each will also generally exhibit a different path loss), $N$ is representative of the thermal noise, and where the parameter "$c$" is defined as $c = c_1 + c_2$. In this regard $c_1$ represents the multi-path pilot and self-interference average power excluding the effects of channel gain, and $c_2$ is the average power of the "other user interference" (i.e., OCNS) power absent channel gain effects. As is implied by Equation (2), the value of the parameter "$c$" is the same for all fingers 214. This is because the magnitudes of the terms $c_1$ and $c_2$ inversely vary relative to each other in accordance with the number of active users presently being served within the system of FIG. 3. Specifically, since the $c_2$ parameter is used to model the equivalent "other users", the value of this term is smaller (and the value $c_1$ larger) when there are fewer users (i.e., more power allocated to the desired signal), and vice versa.

As mentioned above, $\mathbf{r}_{xd}^*$ of Equation (1) is simply representative of the MRC weights, each of which represents the complex conjugate of the channel impulse response of one of the L multipath channels, i.e., $\mathbf{r}_{xd}^* = [h_1^* \ h_2^* \ \cdots \ h_L^*]$, where $[h_1^* \ h_2^* \ \cdots \ h_L^*]$ are the L multipath channel impulse responses. Since the thermal noise ($N$) is much less than the interference power, the OC weights may be expressed as follows:

$$\mathbf{w}_{oc} = \mathbf{R}_{i+n}^{-1} \mathbf{r}_{xd}^* = \begin{bmatrix} \dfrac{1}{\sum_{i \neq 1}^{L} \alpha_i^2} & 0 & 0 & 0 \\ 0 & \dfrac{1}{\sum_{i \neq 2}^{L} \alpha_i^2} & 0 & 0 \\ 0 & 0 & \ddots & 0 \\ 0 & 0 & 0 & \dfrac{1}{\sum_{j \neq L}^{L} \alpha_i^2} \end{bmatrix} \begin{bmatrix} h_1^* \\ h_2^* \\ \vdots \\ h_L^* \end{bmatrix} \quad (3)$$

In Equation (3) above, the gain of each channel $(\alpha_i^2)$ will be obtained using conventional techniques based upon the received pilot signal. It follows that the solution of Equation (3) requires determination of $\mathbf{R}_{i+n}$. However, since $\mathbf{R}_{i+n}$ is a diagonal matrix, the OC weights may be determined simply by computing the value of each diagonal element of $\mathbf{R}_{i+n}$. This straightforward approach is at least in part facilitated by the fact that the parameter c is effectively removed from the calculations, since it is of the same value for all paths. Accordingly, although $\mathbf{R}_{i+n}$ defines an interference correlation matrix, it has been simplified in the manner described above so as not to be explicitly dependent upon interference levels. Rather, $\mathbf{R}_{i+n}$ is instead only dependent upon the instantaneous channel gains of all paths (which are representative of the interference power within the corresponding channel paths). In accordance with the invention, it is therefore unnecessary to determine interference power, as is required by other techniques.

As may also be apparent from Equation (3), it is a feature of the present invention that the unequal distribution of power among the various multipath components of the desired signal is taken into account. In contrast, other combining techniques tend to simplistically assume a uniform power distribution among such "self-interfering" multipath components.

## Implementation of Optimum Combining Scheme

As is described herein, the diversity combining apparatus of the present invention may be configured to provide improved performance relative to conventional combining approaches such as MRC with minimal increase in complexity. In accordance with the invention, it is recognized that calculation of the interference power matrix $\mathbf{R}_{i+n}$ may not be performed through separation of the desired signal from the interference power. However, analysis of the structure of $\mathbf{R}_{i+n}$ reveals that the OC weights for each multi-path correspond to the weight that would be assigned using MRC techniques divided by the interference power of that path. This implies that use of the OC weights of the present invention results not only in compensation for fading but also for interference. Specifically, weights derived using MRC techniques effectively de-rotate the received signal to compensate for channel phase rotation and include a gain factor that is proportional to the channel gain. In this way "better" channels are enabled to play a greater role than "poor" channels in the combining process. However, the OC weights of the present invention further contemplate a gain that is proportional to the applicable interference power, which increases the contribution of channels experiencing relatively lesser amounts of interference power. Since conventional approaches to estimating such interference power may be unreliable and difficult to implement, the following provides a method of obtaining equivalent information more reliably. To this end, it

is noted that $\dfrac{1}{\sum\limits_{i\neq k}^{L}\alpha_i^2} < \dfrac{1}{\sum\limits_{i\neq j}^{L}\alpha_i^2}$ is true if and only if $\alpha_k^2 > \alpha_j^2$, or simply $|\alpha_k|>|\alpha_j|$, and $\alpha_k^2$, $k = 1,2,\cdots L$ can be more reliably measured using the received pilot signal. Therefore, a matrix $\mathbf{R}_{equ}$ is used in lieu of $\mathbf{R}_{i+n}^{-1}$, where $\mathbf{R}_{equ}^{-1}$ may be expressed as:

$$\mathbf{R}_{equ}^{-1} = \begin{bmatrix} |\alpha_1| & & & \\ & |\alpha_2| & & \\ & & \ddots & \\ & & & |\alpha_L| \end{bmatrix}$$

and $|\alpha_k|$ is the absolute value of the gain of the k$^{th}$ of the L multipath channels. Hence

$$\mathbf{R}_{equ} = \begin{bmatrix} |h_1| & \cdot & & \\ & |h_2| & & \\ & & \ddots & \\ & & & |h_L| \end{bmatrix}$$

In order to prevent an increase in required dynamic range from occurring as a consequence of multiplication by the absolute value of the channel gain, all channel gains are normalized to the absolute value of the greatest channel gain.

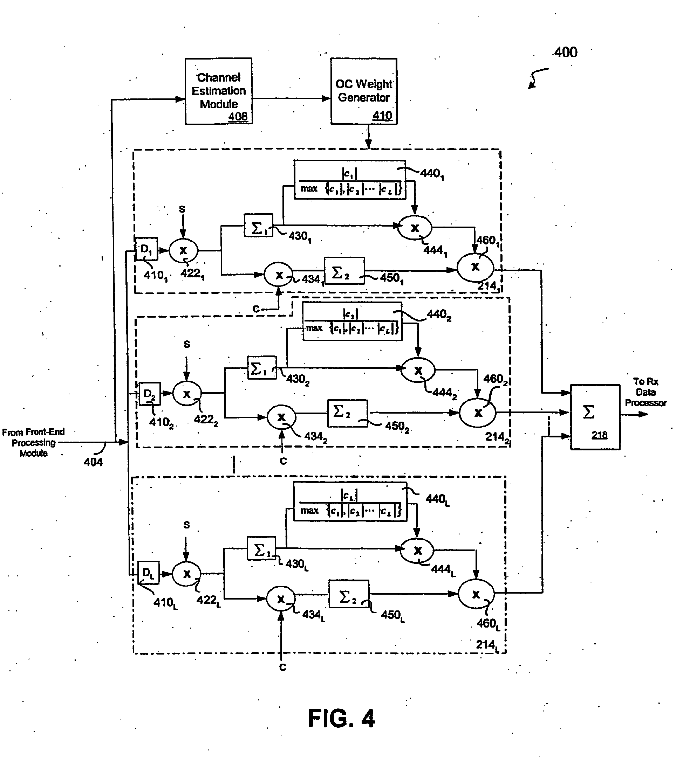

FIG. 4 illustratively represents a RAKE receiver 400 having receiver fingers 414 configured to implement the optimal combining scheme of the present invention. For purposes of clarity, the pilot searcher module of the RAKE receiver 400 has been omitted from FIG. 4. As shown, samples 404 of a received signal are provided to the receiver fingers 414 and to a channel estimation module 408 by a front-end processing module (not shown). The channel estimation module 408 produces estimated channel information used by an OC weight generator 410 in calculating OC weighting values in the manner described above. In particular, the channel estimation module 408 will typically be implemented to determine the gain of each channel $(\alpha_i^2)$ using conventional techniques based upon the received pilot signal.

During operation of the RAKE receiver 400, each finger 414 processes an instance of the received signal associated with a particular diversity signal path. The samples 404 are provided to a delay element 410 of each receiver finger 414 and the delayed samples are then multiplied by the complex scrambling sequence (S) within first multipliers 422. The output of each multiplier 422 is provided to a first summation module 430 and second multiplier 434 of each receiver finger 414. Each first summation module 430 sums samples from the applicable multiplier 422, and provides the result to an OC weighting element 440 and third multiplier 444. As shown, each second multiplier 434 also receives a user-specific spreading code C (e.g., selected from a set of orthogonal Walsh spreading codes) and delivers its output to a second summation module 450. Finally, the output of each third multiplier 444 is combined with the output of the corresponding second summation module 450 by an output multiplier 460. The outputs of the output multipliers 460 correspond to the candidate symbol streams generated by the fingers 414, which are combined within diversity combiner module 218.

Referring to FIG. 4, the quantity defining the value of each weighting element 440, i.e.,

$\dfrac{|h_i|}{\max\{|h_1|,|h_2|\cdots|h_L|\}}$ , may be implemented in a simplified manner. In particular, since $|h_i| \approx L + 0.25S$, for $i = 1,2,\cdots,$

$L$, where $L$ is the absolute value of the larger part (in absolute value) of the real part and the imaginary part of $h_i$ and S is the absolute value of the smaller part (in absolute value) of the real part and the imaginary part of $h_i$. The ratio of

$\dfrac{|h_i|}{\max\{|h_1|,|h_2|\cdots|h_L|\}}$ can be approximated as $\dfrac{|h_i|}{\max\{|h_1|,|h_2|\cdots|h_L|\}} = \dfrac{|h_i|}{|h_{\max}|} \approx \dfrac{L_i}{L_{\max}} \approx \dfrac{2^{\mathbf{N}}}{2^M}$ , where $2^{N-1} \le L_i \le 2^N$

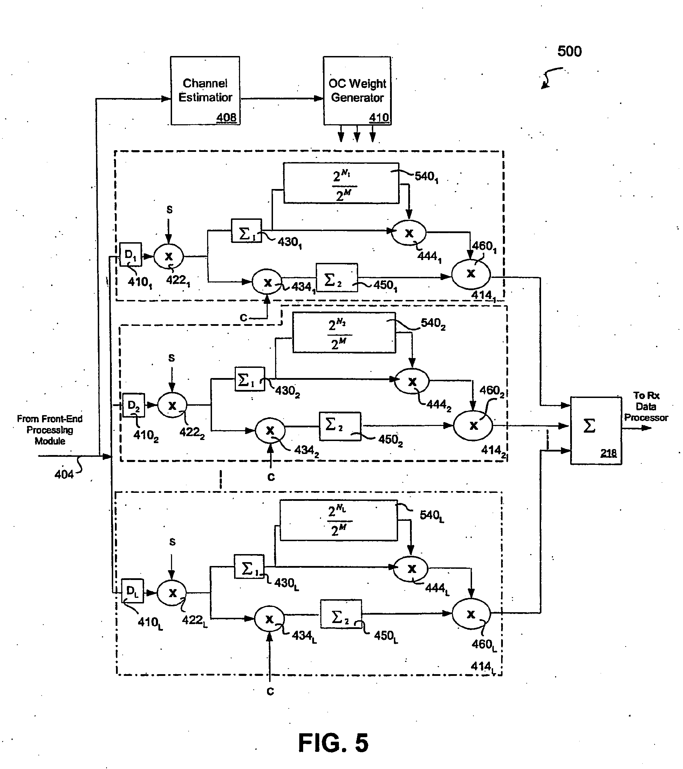

and $2^{M-1} \le L_{\max} \le 2^M$. If this arrangement does not yield sufficient accuracy using a given number of bits (i.e., as represented by M and N), the number of bits may be increased until a desired level of accuracy is attained. Use of this approach permits the weighting elements 440 to be implemented in a simplified manner. Specifically, FIG. 5 depicts a RAKE receiver 500 which incorporates weighting elements 540 comprising simplified versions of the weighting elements 440. With the exception of the simplified weighting elements 540, the RAKE receiver 500 is substantially identical to the RAKE receiver 400. As may be appreciated by reference to FIG. 5, the simplified OC implementation 500 advantageously uses only slightly more (i.e., 2) shift operations per finger relative to conventional approaches such as MRC. In sum, the RAKE finger weights computed consistent with one embodiment of the present invention comprise a set of conventional MRC weights further multiplied by the applicable finger channel gains, which results in mitigation of multipath interference. In order not to increase the dynamic range of the applicable signal by virtue of the multiplication operation, the absolute gain value of each channel is normalized by the greatest absolute value of all the channel gains.

The foregoing description, for purposes of explanation, used specific nomenclature to provide a thorough understanding of the invention. However, it will be apparent to one skilled in the art that the specific details are not required in order to practice the invention. In other instances, well-known circuits and devices are shown in block diagram form in order to avoid unnecessary distraction from the underlying invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. It is intended that the following Claims and their equivalents define the scope of the invention.

**Claims**

1. A method for recovering information from a spread spectrum information signal included within a composite signal received from a signal propagation medium, said method comprising:

correlating time-offset versions of the composite signal with a spreading sequence in order to produce a plurality of correlation signals ;
generating weighting factors so as to maximize a signal to interference plus noise ratio SINR of an estimate of the information;
generating a plurality of weighted symbol streams by processing the plurality of correlation signals in accordance with the weighting factors; and producing the estimate of the information by combining the plurality of weighted symbol streams;
wherein said step of generating weighting factors includes:

computing absolute values, of the channel impulse response of a plurality of multipath channels traversed by a corresponding plurality of multipath components of the composite signal;
determining a first of said weighting factors by computing a ratio of a first of said absolute values to a maximum of said absolute values; and
determining a second of said weighting factors by computing a ratio of a second of said absolute values to the maximum of said absolute values.

2. An apparatus for recovering information from a spread spectrum information signal included within a composite signal received from a signal propagation medium, said apparatus comprising:

a correlation arrangement operative to correlate time-offset versions of the composite signal with a spreading sequence in order to produce a plurality of correlation signals;
a weight generator (410) operative to generate weighting factors so as to maximize a signal to interference plus noise ratio SINR of an estimate of the information;
a plurality of weighting arrangements (440) disposed to generate a plurality of weighted symbol streams by processing the plurality of correlation signals in accordance with the weighting factors; and
a combiner (218) coupled to the plurality of weighting arrangements (440), operative to produce the estimate of the information;

wherein said weight generator (410) is configured to:

compute absolute values, of the channel impulse response of a plurality of multipath channels traversed by a corresponding plurality of multipath components of the composite signal;
determine a first of said weighting factors by computing a ratio of a first of said absolute values to a maximum of said absolute values; and
determine a second of said weighting factors by computing a ratio of a second of said absolute values to the maximum of said absolute values.

3. The apparatus of claim 2 wherein each of said plurality of weighting arrangements (440) is operative to split a corresponding one of said correlation signals into first and second signals, each of said first signals being scaled by one of said weighting factors so as to generate a plurality of scaled signals.

4. The apparatus of claim 3 wherein each of said weighting arrangements (440) further includes a correlator for correlating one of said second signals with a user-specific spreading signal so as to generated a channelized signal.

**Patentansprüche**

1. Verfahren zum Wiedererlangen von Informationen aus einem Spreizspektrum-Informationssignal, das in einem zusammengesetzten Signal enthalten ist, das von einem Signalverbreitungsmedium empfangen wurde, wobei das Verfahren umfasst:

Korrelieren zeitversetzter Versionen des zusammengesetzten Signals mit einer Spreizsequenz, um eine Vielzahl von Korrelationssignalen zu erzeugen;
Erzeugen von Gewichtungsfaktoren, um ein Signal-zu-Störung-plus-Rausch-Verhältnis (signal to interference plus noise ratio; SINR) eines Schätzwerts der Informationen zu maximieren;
Erzeugen einer Vielzahl gewichteter Symbolströme durch Verarbeiten der Vielzahl von Korrelationssignalen gemäß den Gewichtungsfaktoren; und
Erzeugen des Schätzwerts der Informationen durch Kombinieren der Vielzahl gewichteter Symbolströme;

wobei der Schritt des Erzeugens von Gewichtungsfaktoren umfasst:

Berechnen von Absolutwerten der Kanalimpulsantwort einer Vielzahl von Mehrpfadkanälen, die von einer entsprechenden Vielzahl von Mehrpfadkomponenten des zusammengesetzten Signals durchlaufen werden;
Ermitteln eines ersten der Gewichtungsfaktoren durch Berechnen des Verhältnisses eines ersten der Absolutwerte zu einem Maximum der Absolutwerte; und
Ermitteln eines zweiten der Gewichtungsfaktoren durch Berechnen des Verhältnisses eines zweiten der Absolutwerte zu dem Maximum der Absolutwerte.

2. Vorrichtung zum Wiedererlangen von Informationen aus einem Spreizspektrum-Informationssignal, das in einem zusammengesetzten Signal enthalten ist, das von einem Signalverbreitungsmedium empfangen wurde, wobei die Vorrichtung aufweist:

eine Korrelationsanordnung, die so betreibbar ist, dass sie zeitversetzte Versionen des zusammengesetzten Signals mit einer Spreizsequenz korreliert, um eine Vielzahl von Korrelationssignalen zu erzeugen; einen Gewichtungsgenerator (410), der so betreibbar ist, dass er Gewichtungsfaktoren erzeugt, um ein Signal-zu-Störung-plus-RauschVerhältnis (signal to interference plus noise ratio; SINR) eines Schätzwerts der Informationen zu maximieren;

eine Vielzahl von Gewichtungsanordnungen (440), die so ausgelegt sind, dass sie eine Vielzahl gewichteter Symbolströme durch Verarbeiten der Vielzahl von Korrelationssignalen gemäß den Gewichtungsfaktoren erzeugen; und

einen Kombinierer (218), der mit der Vielzahl von Gewichtungsanordnungen (440) gekoppelt und so betreibbar ist, dass er den Schätzwert der Informationen erzeugt;

wobei der Gewichtungsgenerator (410) so konfiguriert ist, dass er:

Absolutwerte der Kanalimpulsantwort einer Vielzahl von Mehrpfadkanälen berechnet, die von einer entsprechenden Vielzahl von Mehrpfadkomponenten des zusammengesetzten Signals durchlaufen werden;
einen ersten der Gewichtungsfaktoren durch Berechnen des Verhältnisses eines ersten der Absolutwerte zu einem Maximum der Absolutwerte ermittelt; und
einen zweiten der Gewichtungsfaktoren durch Berechnen des Verhältnisses eines zweiten der Absolutwerte zu dem Maximum der Absolutwerte ermittelt.

3. Vorrichtung nach Anspruch 2, wobei jede der Vielzahl von Gewichtungsanordnungen (440) so betreibbar ist, dass sie ein entsprechendes der Korrelationssignale in erste und zweite Signale aufteilt, wobei jedes der ersten Signale durch einen der Gewichtungsfaktoren skaliert wird, um eine Vielzahl skalierter Signale zu erzeugen.

4. Vorrichtung nach Anspruch 3, wobei jede der Gewichtungsanordnungen (440) des Weiteren einen Korrelator aufweist zum Korrelieren eines der zweiten Signale mit einem benutzerspezifischen Spreizsignal, um ein kanalisiertes Signal zu erzeugen.

**Revendications**

1. Procédé pour récupérer des informations d'un signal d'informations à étalement de spectre inclus dans un signal composite reçu d'un support de propagation de signal, ledit procédé comprenant les étapes suivantes :

corrélation des versions décalées dans le temps du signal composite avec une séquence d'étalement pour produire une pluralité de signaux de corrélation ;
génération des facteurs de pondération de manière à maximiser un rapport signal à interférences plus bruit, SINR, d'une estimation des informations ;
génération d'une pluralité de flux de symboles pondérés en traitant la pluralité de signaux de corrélation en fonction des facteurs de pondération ; et produire l'estimation des informations en combinant la pluralité de flux de symboles pondérés ;

dans lequel ladite étape de génération de facteurs de pondération comprend les étapes de :

calcul des valeurs absolues de la réponse impulsionnelle de canal d'une pluralité de canaux multivoies traversés par une pluralité correspondante de composantes multivoies du signal composite ;
détermination d'un premier desdits facteurs de pondération en calculant un rapport d'une première desdites valeurs absolues sur un maximum desdites valeurs absolues ; et
déterminer un deuxième desdits facteurs de pondération en calculant un rapport d'une deuxième desdites valeurs absolues sur le maximum desdites valeurs absolues.

2. Appareil pour récupérer des informations d'un signal d'informations d'étalement de spectre inclus dans un signal composite reçu d'un support de propagation de signal, ledit appareil comprenant :

un agencement de corrélation utilisé pour corréler des versions décalées dans le temps du signal composite avec une séquence d'étalement pour produire une pluralité de signaux de corrélation ;
un générateur de pondération (410) utilisé pour générer des facteurs de pondération de manière à maximiser un rapport signal à interférences plus bruit, SINR, d'une estimation des informations ;

une pluralité d'agencements de pondération (440) disposés pour générer une pluralité de flux de symboles pondérés en traitant la pluralité de signaux de corrélation en fonction des facteurs de pondération ; et un multiplexeur (218) couplé à la pluralité d'agencements de pondération (440) pouvant être utilisé pour produire l'estimation des informations ;

dans lequel ledit générateur de pondération (410) est configuré pour :

calculer des valeurs absolues de la réponse impulsionnelle de canal d'une pluralité de canaux multivoies traversés par une pluralité correspondante de composants multivoies du signal composite ; déterminer un premier desdits facteurs de pondération en calculant un rapport d'une première desdites valeurs absolues sur un maximum desdites valeurs absolues ; et déterminer un deuxième desdits facteurs de pondération en calculant un rapport d'une deuxième desdites valeurs absolues sur le maximum desdites valeurs absolues.

3. Appareil selon la revendication 2, dans lequel chacun de ladite pluralité d'agencements de pondération (440) est utilisé pour diviser l'un desdits signaux de corrélation correspondants en des premiers et seconds signaux, chacun desdits premiers signaux étant mis à l'échelle par l'un desdits facteurs de pondération de manière à générer une pluralité de signaux mis à l'échelle.

4. Appareil selon la revendication 3, dans lequel chacun desdits agencements de pondération (440) comprend en outre un corrélateur pour corréler l'un desdits deuxièmes signaux avec un signal d'étalement spécifique à l'utilisateur de manière à générer un signal canalisé.

FIG. 1

| PILOT SEARCHER | | | |
| --- | --- | --- | --- |

**FROM FRONT-END PROCESSING MODULE 104**

106

PILOT SEARCHER
210

FINGER #1
214

FINGER #2
214

FINGER #N
214

$\Sigma$
218

RX DATA PROCESSOR
222

DATA OUT

110

# FIG. 2

FIG. 3

**FIG. 4**

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6215814 B